# EUROPEAN PATENT APPLICATION

(11) **EP 2 615 552 A1**
(43) Date of publication of application: **17.07.2013**
(21) Application number: 10857024.3
(22) Date of filing: 07.09.2010
(51) Int. Cl.: G06F 11/36, G06F 11/30

(54) **SYSTEM TESTING METHOD**

(71) Applicant: Hyundai Motor Company, Seoul 137-938 (KR); Kia Motors Corporation, Seoul 137-938 (KR); Ewha University- Industry Collaboration Foundation, Seoul 120-750 (KR)
(72) Inventor: CHOI, Byoung-Ju, Seoul 135-788 (KR); SEO, Joo-Young, Seoul 138-200 (KR); YANG, Sueng Wan, Gunpo-si Gyeonggi-do 435-704 (KR); OH, JungSuk, Gwangmyeong-si Gyeonggi-do 423-801 (KR)
(74) Representative: Isarpatent
(86) International application number: PCT/KR2010/006068
(87) International publication number: WO 2012/033237

(57) **Abstract**

The present invention provides a system testing method. The method includes identifying a position of a process control block, approaching the position thereof, and monitoring performance factors thereof.

## Description

### [Technical Field]

The present invention relates to a system testing method.

### [Background Art]

Recently, there is an increasing interest in electronic control technology even in a machine industry sector, such as vehicles. The core of the electronic control technology is embedded software, and the quality of the software has a great effect on the quality of the entire product.

In the past, software test technology and test tools for helping quality have been developed. However, there are several problems in that the software test technology and test tools are applied to a test for embedded software without change owing to characteristics unique to the embedded software.

First, the embedded software is tailed and produced for a specific hardware and function. Most pieces of embedded software are designed so that they are optimized for restrictive conditions in which available system resources, such as memory, are insufficient and are operated. Accordingly, embedded software operating in a target environment has very limited resources when a system operates, as compared with common software operating in a host environment.

Second, embedded software is chiefly operated by various types of external inputs, such as electronic signals or communication protocols, rather than by user commands, such as the selection of menus. Accordingly, there is a problem in that conventional software test technology and test tools chiefly operated in response to user commands are applied to a test for embedded software without change.

Third, in conventional software test technology, only the case where a high processor use rate continues when performance is tested is considered as symptoms indicating a performance bottleneck. In this case, the case where the processor use rate of an important component falls below a basic performance level is not considered as abnormal symptoms. Accordingly, there is a problem in that the performance of a system cannot be precisely tested.

### [Disclosure]

### [Technical Problem]

An embodiment of the present invention is directed to technology related to a system testing method of collecting data for identifying a performance bottleneck and a cause and position of the bottleneck using minimum resources necessary for a system operation without affecting the operation environment of the system.

### [Technical Solution]

According to an embodiment of the present invention, the present invention provides a system testing method including identifying the position of a process control block, accessing the position of the process control block, and monitoring the performance factors of the process control block.

### [Advantageous Effects]

The present invention is advantageous in that it can test a system using minimum resources necessary for a system operation without affecting the operation environment of a system.

Furthermore, the present invention is advantageous in that it can test a system based on inputs outside the system.

Furthermore, the present invention is advantageous in that it can test whether the case where the use rate of a processor falls below a basic level corresponds to a bottleneck phenomenon or not.

### [Description of Drawings]

Fig. 1 is a flowchart illustrating a system testing method according to an embodiment of the present invention;
Fig. 2 illustrates a program code for implementing the system testing method according to an embodiment of the present invention; and
Fig. 3 is a diagram showing the construction of a system for executing the system testing method according to an embodiment of the present invention.

### [Best Mode]

A system testing method of the present invention includes identifying the position of a process control block, accessing the position of the process control block, and monitoring the performance factors of the process control block.

### [Mode for Invention]

Exemplary embodiments of the present invention will be described more fully hereinafter with reference to the accompanying drawings.

In a system testing method according to the present invention, a process control block means a data structure that manages information about the execution of processes that are being operated by an Operating System (OS) in a system.

For example, the process control block may mean the data structure of a kernel which manages information about the recent execution of processes operated by a system in real time.

The system testing method according to the present invention hooks a function table related to memory through the process control block in order to detect a defect occurring in the memory of a system.

In particular, the system testing method according to the present invention may hack pieces of system execution information, such as a page fault rate and a processor use rate, and analyze system performance based on the pieces of system execution information in order to analyze a performance bottleneck and a cause of the bottleneck in the data of the process control block.

The hacking of the process control block can minimize a reduction in system performance due to a test because it concentrates the collection of data necessary for performance analysis on the process control block only.

Furthermore, the present invention can minimize a reduction in system performance and, at the same time, satisfy requirements for a performance test in a system operation environment.

For example, the system testing method according to the present invention may be performed under the following conditions.

### [System test conditions]

1. Test range: a performance test for a system when all hardware and software components within the entire system operate.
2. Test method: a run-time test performed in a non-re-compile, non-re-link, and non-re-execute manner in order to guarantee the system execution method.
3. Test target: a test for a binary code loaded onto a system without change of the original source/binary code of test target software which does not include an additional code, such as debugging information.
4. Performance data: the collection of performance data in which not only a processor, but also memory, I/O devices, and network resources are taken into consideration in order to check a cause of a performance bottleneck.
5. Tracking of bottleneck position: the collection of data that enables source level analysis, such as a function, in order to check the position of a performance bottleneck.
6. Hardware independence: a test under the same hardware conditions as those of a system operation environment without additional hardware or dependency on additional hardware for the test.
7. Software independence: a test under the same hardware conditions as those of a system operation environment in which an instrumented kernel or virtual machine for the test is not used.
8. Performance delay rate: the minimization of a system performance delay rate due to a test in order to guarantee a real-time operation.
9. Code addition rate: the minimization of a code addition rate due to a test for the purpose of an operation within limited resources.

It is however to be noted that the conditions may vary depending on system operation environments and the present invention may be applied to various system operation environments without being limited to the above-described system operation environment.

The process control block is a kernel data structure including information about the execution of processes that are operating in a system. The process control block further includes a processor usage for determining a performance bottleneck and performance factors, such as an available memory size. The kernel maintains the latest values of the processor usage and the performance factors.

The system testing method according to the present invention may be used in performance analysis for the development of an agent who hacks the values. Performance factors necessary to analyze a cause of a performance bottleneck and the structure of a process control block associated with the performance factors are described below.

Performance means the degree that a system or components perform functions under restricted conditions in a given system. A performance test is an estimation regarding whether a system satisfies specific performance requirements or not.

The performance of a system can be improved by analyzing a performance bottleneck and a cause thereof through the performance test and solving them.

The performance bottleneck of a system is a phenomenon in which the performance of a system is deteriorated owing to contention for limited resources, such as memory, I/O devices, and a network. The system performance bottleneck may result from various causes, such as the shortage of resources, contention for shared resources, the exclusive possession of resources, erroneous configurations of resources, and erroneous operations of resources.

A performance bottleneck resulting from memory may occur when available memory is insufficient. Core memory performance factors capable of identifying memory shortage symptoms may include a page fault and a memory usage.

The system testing method according to the present invention may identify a variety of performance bottlenecks.

First, the system testing method according to the present invention may determine a memory bottleneck based on a page fault.

For example, when a page fault is high, it may correspond to a memory bottleneck. The page fault is a phenomenon occurring when a program attempts to access data or a code which exists in its address space, but does not exist in the memory of a system at the present time. When the page fault occurs, an OS fetches the data or code in the memory and enables the program to continue to operate as if a page fault has not occurred. The exception handling of the OS on a page fault delays the processing time of an application and affects the entire system performance.

Furthermore, the system testing method according to the present invention may identify a performance bottleneck through the memory usage. The memory of a system includes a physical memory usage and a virtual memory usage and may further include a heap memory usage for each process. The system testing method according to the present invention determines a performance bottleneck based on the sum of the memory usages.

Furthermore, the system testing method according to the present invention may identify a performance bottleneck based on a processor usage (or a CPU usage).

For example, the system testing method according to the present invention may determine that there is a bottleneck in a CPU if the processor usage is high and there is available memory. In contrast, if the processor usage is high and the memory is exhausted, a performance problem may result from a memory bottleneck rather than a CPU bottleneck.

Furthermore, the system testing method according to the present invention may identify a performance bottleneck based on a process usage. The process usage means the time in which an idle time is excluded from the entire CPU usage in the execution time of a system.

Furthermore, the system testing method according to the present invention may determine a performance bottleneck based on a user time. The user time means the time for which execution stays in a user space, that is, the time for which applications are executed.

Furthermore, the system testing method according to the present invention may determine a performance bottleneck based on a kernel time. The kernel time means the time for which execution stays in a kernel space, that is, the time that it takes for the kernel to process service.

The process control block is a data structure that manages an OS kernel in order to control processes in run-time. In general, pieces of execution information, such as a process ID, register context, the address space of a process, the memory usage of a process, a shared function list, resources shared by processes, and the priority and state of a process, are stored in the process control block.

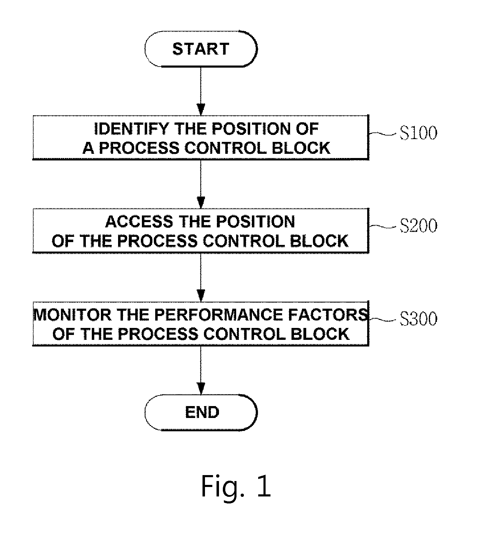

Fig. 1 is a flowchart illustrating a system testing method according to an embodiment of the present invention.

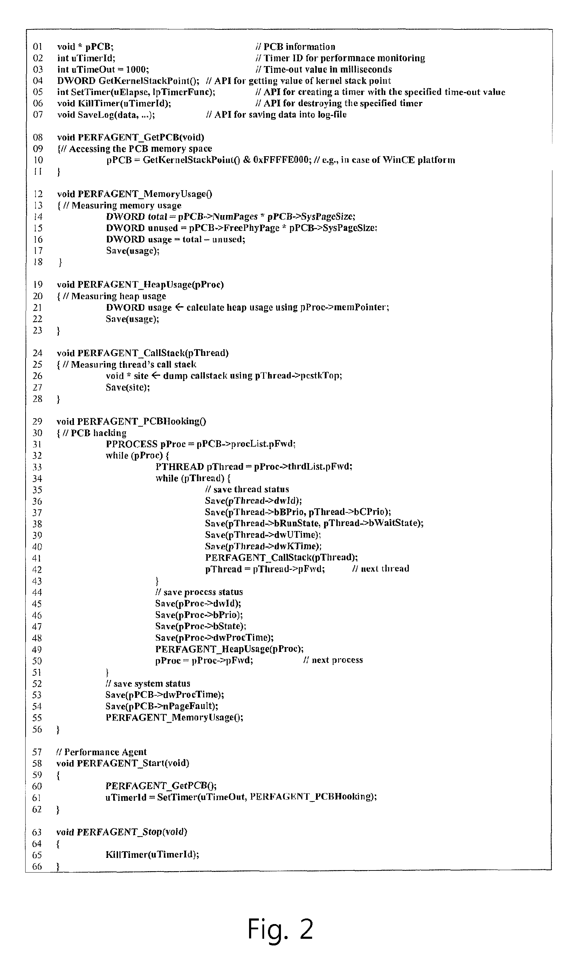

Fig. 2 illustrates a program code for implementing the system testing method according to an embodiment of the present invention.

Referring to Fig. 1, the system testing method according to the present invention includes identifying the position of a process control block at step S100, accessing the process control block at step S200, and monitoring the performance factors of the process control block at step S300.

In identifying the position of the process control block at step S100, the position where a process control block is stored is not determined because the process control block is generated or the process control block disappears when a process is generated or the process disappears.

However, information about the process control block of a current process that occupies a processor (e.g., a CPU) may be known because the base address of a process control block regarding the current process is managed in a specific memory space or managed at a specific fixed address.

For example, in the program code of Fig. 2, the base address of a process control block regarding a current process may be calculated as a stack pointer like in line 7, and the process control block of all processes may be accessed like in line 31.

In accessing the position of the process control block at step S200, the process control block is placed in the memory space of a kernel.

In this case, access to the memory space of the kernel may not be allowed in terms of security. If access to the memory space of the kernel is blocked as described above, pseudo codes may be implemented in the form of a virtual driver so that the address space of the kernel can be shared like in the lower lines of the program code of Fig. 2. Accordingly, a process control block placed in the memory space of the kernel may be accessed.

In the monitoring the performance factors of the program control block at step S300, like in line 61 and line 65 of the program code of Fig. 2, timer-interrupt may be used and performance data may be measured at a predetermined time interval (e.g., 1 sec pr 100 msec).

Furthermore, the system testing method according to the present invention may measure performance factors, while circulating the processes and thread lists of the process control block, like in line 31 and line 33 of the program code of Fig. 2 in order to analyze system performance not only in a system unit, but also in a process or thread unit.

In this case, call-stack information is stored for each thread in order to precisely track the position at which a system performance bottleneck occurs. Performance factors measured for each monitoring are as follows.

The performance factors of the process control block may include one or more of the processor usage, the memory usage, and the page fault.

The performance factors of a process of the process control block may include one or more of an identifier (ID), the state of a process, the priority of a process, a heap usage, the operating time of a process, a use time, and a kernel time.

The performance factors of a thread of the process control block may include one or more of an ID, a run state, a basic priority, a current priority, a use time, a kernel time, and call-stack information.

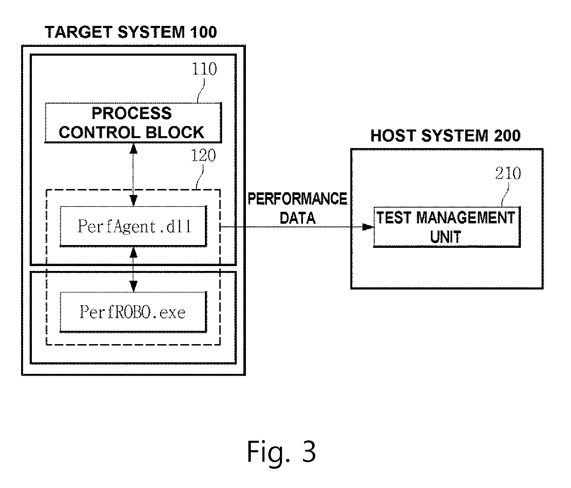

Fig. 3 shows the construction of a system for executing the system testing method according to the present invention.

Referring to Fig. 3, the system for executing the system testing method according to the present invention includes an agent unit 120 and a test management unit 210.

The agent unit 120 is included in a target system 100, that is, a target of test, and is configured to measure performance data. The agent unit 120 executes the algorithm shown in Fig. 1.

The test management unit 210 is included in a host system 200, such as a Personal Computer (PC). The test management unit 210 analyzes performance data collected by the agent unit 120 and detects a performance bottleneck and analyzes test coverage based on the analyzed performance data.

Particularly, the agent unit 120 is mounted on the target system 100 disposed in an operation environment, and it functions to periodically measure data related to system performance when the target system is operated in response to the test start or end command of a user.

For example, the agent unit 120 may include PerfAgent.dll and PerfROBO.exe.

PerfAgent.dll is a virtual kernel device driver that implements the algorithm of Fig.
1. The virtual kernel device driver hacks information about the process control block of a kernel for the purpose of a performance test.

PerfROBO.exe functions as a test server for controlling whether to activate the virtual kernel device driver in response to the test start or end command of a user.

The test server executes a system performance monitoring module through timer setting when the virtual kernel device driver (e.g., PerfAgent.dll) is activated in response to the test start command and terminates a test by finishing a set timer when the test is finished at the request of a user.

Meanwhile, the test management unit 210 may store the collected performance data in a designated storage medium. The test management unit 210 functions to analyze the log file of the host system 200 and detect a performance bottleneck occurred in run-time based on the analyzed log file.

For example, if the test management unit 210 stores performance data in a storage medium in the form of a binary code, the test management unit 210 may use a binary execution code and collected profiling data for a test target as input and display information about the position of a problematic function based on call-stack information when outputting test coverage and performance information.

In the system testing method according to the present invention, various methods of monitoring the performance of a system may be used.

First, a method of inserting an analysis code into a kernel may be used. In this method, the analysis code is inserted into the kernel statically or dynamically.

In the method of inserting the analysis code into the kernel dynamically, an analysis code may be inserted into a kernel code in run-time. In this case, a code for collecting data necessary for performance analysis can be inserted without booting a system.

In the method of inserting the analysis code into the kernel statically, a previously produced kernel is used.

For example, an analysis code for monitoring important system performance factors may be embedded in a kernel. In the case of performance monitoring, performance data is received through the analysis code previously inserted into the kernel. In this case, when performance is monitored, a variety of system performance factors, including a processor usage and a memory usage, can be measured.

Furthermore, a method using a simulator may be used as the performance monitoring method. This method is useful to check the performance of a system at the early stage of development.

Furthermore, hardware may be used as the performance monitoring method. Hardware performance factors mean a set of specifically produced registers. If the hardware performance factors are used, performance associated with a CPU, a cache, and memory can be monitored using system overhead lower than that of software-based performance factors. In this method, a source code or a binary code needs not to be modified.

While the invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention can test a system using resources necessary for a system operation at a minimum without affecting the operation environment of the system.

## Claims

1. A system testing method, comprising:
identifying a position of a process control block;
accessing the position of the process control block; and
monitoring performance factors of the process control block.

2. The system testing method of claim 1, wherein the process control block is placed in kernel memory.

3. The system testing method of claim 2, wherein the accessing-the-position-of-the-process-control-block comprises accessing the kernel memory using a virtual driver.

4. The system testing method of claim 1, wherein the monitoring-performance-factors-of-the-process-control-block comprises measuring the performance factors of the process control block at a predetermined time interval.

5. The system testing method of claim 2, wherein the monitoring-performance-factors-of-the-process-control-block comprises measuring the performance factors for a process and thread of the process control block.

6. The system testing method of claim 5, wherein the performance factors of the process control block comprise one or more of a processor usage, a memory usage, and a page fault.

7. The system testing method of claim 6, wherein the performance factors of the process of the process control block comprise one or more of an identifier (ID), a state of the process, a priority of the process, a heap usage, an operating time of the process, a use time, and a kernel time.

8. The system testing method of claim 6, wherein the performance factors of the thread of the process control block comprise one or more of an ID, a run state, a basic priority, a current priority, a use time, a kernel time, and a call-stack.

9. The system testing method of claim 1, wherein the process control block stores one or more of pieces of information about an ID of a process, register context, an address of the process, a memory usage, a shared function list, resources of the process, a priority of the process, and a state of the process.

10. The system testing method of claim 1, wherein the monitoring-performance-factors-of-the-process-control-block comprises monitoring the performance factors of the process control block by inserting an analysis code into a kernel.

11. The system testing method of claim 1, wherein the monitoring-performance-factors-of-the-process-control-block comprises monitoring the performance factors of the process control block using a simulation program.

12. The system testing method of claim 1, wherein the monitoring-performance-factors-of-the-process-control-block comprises monitoring the performance factors of the process control block using hardware including registers.
